# EUROPEAN PATENT SPECIFICATION

(11) **EP 4 436 196 B1**
(45) Date of publication and mention of the grant of the patent: **21.10.2026**
(21) Application number: 22894814.7
(22) Date of filing: 16.11.2022
(51) Int. Cl.: H04N 23/68, H04N 23/50, H04N 23/54, H04N 23/55, H04N 23/57, H04M 1/02, G03B 5/00

(54) **CAMERA MODULE AND ELECTRONIC DEVICE**
KAMERAMODUL UND ELEKTRONISCHE VORRICHTUNG
MODULE DE CAMÉRA ET DISPOSITIF ÉLECTRONIQUE

(30) Priority: 17.11.2021 CN 202111364956
(43) Date of publication of application: 25.09.2024
(73) Proprietor: Vivo Mobile Communication Co., Ltd., Dongguan, Guangdong 523863 (CN)
(72) Inventor: MA, Zhiting, Dongguan, Guangdong 523863 (CN); LIU, Jianhua, Dongguan, Guangdong 523863 (CN); ZHONG, Rukun, Dongguan, Guangdong 523863 (CN); YANG, Ze, Dongguan, Guangdong 523863 (CN)
(74) Representative: Lavoix
(86) International application number: PCT/CN2022/132145
(87) International publication number: WO 2023/088281

(56) References cited:
- CN-A- 111 556 239
- CN-A- 112 073 600
- CN-A- 112 343 778
- CN-A- 112 788 241
- CN-A- 113 395 445
- CN-U- 214 381 107
- JP-A- 2011 158 552
- US-A1- 2006 007 320
- US-A1- 2021 289 111

## Description

### TECHNICAL FIELD

This application relates to the field of communication device technologies, and in particular to a camera module and an electronic device.

### BACKGROUND

With technologies develop, electronic devices (such as mobile phones and tablet computers) have advanced significantly. As a powerful tool, the electronic device greatly facilitates the life and work of users. A camera function is a basic function of the electronic device, and can meet shooting requirements of the user. The camera function is usually implemented by a camera module of the electronic device.

In the process of implementing the present invention, the inventor finds that a related technology has the following problem: When a user usually holds an electronic device to shoot an image, quality of an image shot by the electronic device is poor due to jitter in a handheld shooting process. CN113395445A discloses a camera module and an electronic device. US 2021/289111 A1 discloses a camera module.

### SUMMARY

Embodiments of this application are intended to provide a camera module and an electronic device, which can resolve a problem of poor image-shooting quality of an electric device.

The invention is set out in the appended set of claims.

According to the claimed invention, a camera module is provided, the camera module comprising a base frame, a photosensitive chip, a first base plate, a second base plate, a first guide post, a second guide post, a first driving mechanism, and a second driving mechanism, wherein the first guide post is disposed on the base frame, the first base plate is movably connected to the first guide post, and the first base plate moves in an extension direction of the first guide post; the second guide post is disposed on the first base plate, the second base plate is movably connected to the second guide post, the second base plate moves in an extension direction of the second guide post, and the photosensitive chip is disposed on the second base plate; the first driving mechanism is connected to the first base plate, and the first driving mechanism drives, through the first base plate and the second base plate, the photosensitive chip to move; and the second driving mechanism is connected to the second base plate, and the second driving mechanism drives, through the second base plate, the photosensitive chip to move; and the first driving mechanism comprises a first magnet and a first coil, the first coil is disposed opposite to the first magnet, one of the first magnet and the first coil is disposed on the base frame, and the other of the first magnet and the first coil is disposed on the first base plate; and the first coil and the first magnet drive the first base plate to move; and the second driving mechanism comprises a second magnet and a second coil, the second coil is disposed opposite to the second magnet, one of the second magnet and the second coil is disposed on the base frame, and the other of the second magnet and the second coil is disposed on the second base plate; and the second coil and the second magnet drive the second base plate to move; characterized in that the first base plate is provided with a first mounting hole, and the first magnet or the first coil is located in the first mounting hole; and the second base plate is provided with a second mounting hole, and the second magnet or the second coil is located in the second mounting hole.

In this solution, both the first base plate and the second base plate can drive the photosensitive chip to move, so that a shaking amount of the camera module can be compensated, and then a stabilization function can be implemented to improve image shooting quality of the electronic device.

### BRIEF DESCRIPTION OF DRAWINGS

FIG. 1 is an exploded view of a camera module disclosed in an embodiment of this application;
FIG. 2 and FIG. 3 are schematic diagrams of a structure of a camera module according to an embodiment of this application; and
FIG. 4 is a top view of a camera module according to an embodiment of this application.

Reference numerals:
100-base frame, 200-photosensitive chip, 300-first base plate, 310-first clamping part, 320-first guide hole, 330-first avoiding hole, 340-first mounting hole, 410-first magnet, 420-first coil, 430-second magnet, 440-second coil, 500-first guide post, 600-second base plate, 610-second clamping part, 620-second guide hole, 630-second mounting hole, 700-second guide post, and 800-circuit board.

### DESCRIPTION OF EMBODIMENTS

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that the data used in such a way is interchangeable in proper circumstances so that the embodiments of this application can be implemented in an order other than the order illustrated or described herein. In addition, in this specification and the claims, "and/or" represents at least one of connected objects, and a character "/" generally represents an "or" relationship between associated objects.

A camera module provided in an embodiment of this application will be described in detail below through specific embodiments and application scenarios with reference to the accompanying drawings.

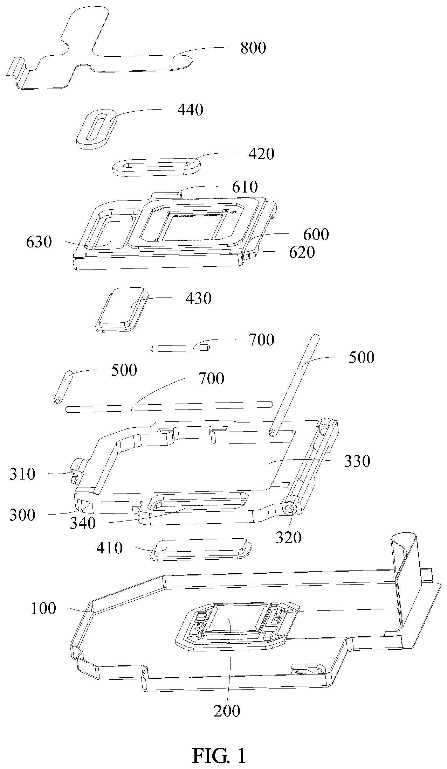

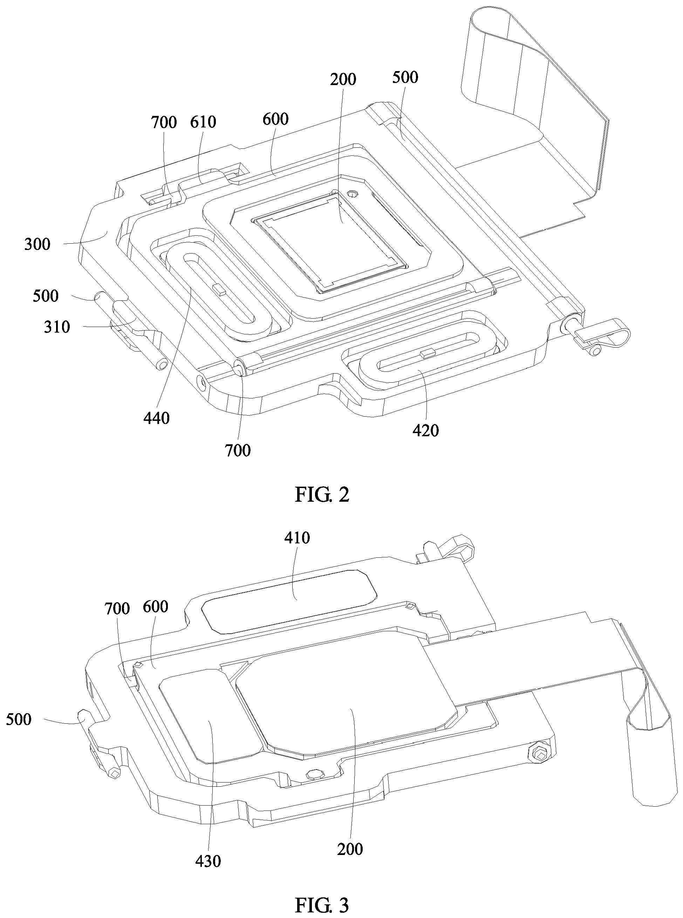

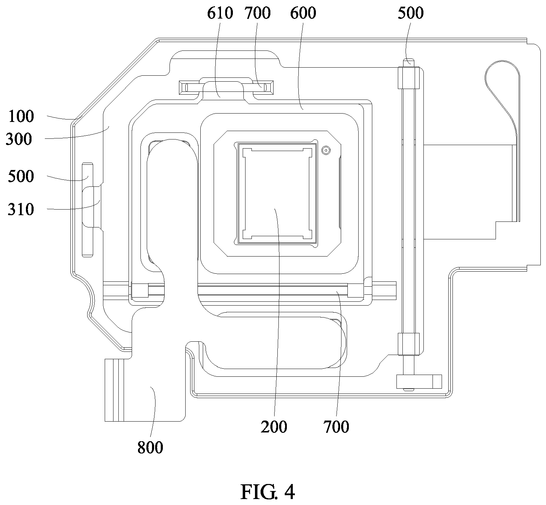

Refer to FIG. 1 to FIG. 4. An embodiment of this application discloses a camera module. The camera module includes a base frame 100, a lens, a photosensitive chip 200, a first base plate 300, a second base plate 600, a first guide post 500, a second guide post 700, a first driving mechanism, and a second driving mechanism.

The base frame 100 provides a mounting foundation for other components of the camera module. The first guide post 500 is disposed on the base frame 100. In this case, the first guide post 500 is fastened on the base frame 100. The first base plate 300 is movably connected to the first guide post 500, and the first base plate 300 moves in an extending direction of the first guide post 500, that is, the first base plate 300 moves relative to the base frame 100 in the extending direction of the first guide post 500.

The second guide post 700 is disposed on the first base plate 300, that is, the second guide post 700 is fastened on the first base plate 300. The second base plate 600 is movably connected to the second guide post 700, and the second base plate 600 moves in an extending direction of the second guide post 700. That is, the second base plate 600 moves relative to the first base plate 300 in the extending direction of the second guide post 700.

The photosensitive chip 200 is disposed on the second base plate 600. Optionally, the photosensitive chip 200 may be bonded to the second base plate 600, or certainly may be connected to the second base plate 600 in other manners, which is not limited herein. The lens is disposed on the base frame 100, the photosensitive chip 200 is opposite to the lens, and the photosensitive chip 200 may be electrically connected to a mainboard of the electronic device through a flexible circuit board. In this case, external light is incident on the photosensitive chip 200 through the lens, and the photosensitive chip 200 converts an optical signal into an electrical signal and transmits the electrical signal to the mainboard of the electronic device, to implement a shooting function of the camera module.

The first driving mechanism is connected to the first base plate 300, and the first driving mechanism drives, through the first base plate 300 and the second base plate 600, the photosensitive chip 200 to move. The second driving mechanism is connected to the second base plate 600, and the second driving mechanism drives, through the second base plate 600, the photosensitive chip 200 to move.

In this embodiment of this application, since the second base plate 600 is movably connected to the first base plate 300 through the second guide post 700, when the first driving mechanism drives the first base plate 300 to move, the first base plate 300 can drive the second base plate 600 and the photosensitive chip 200 to move together. In addition, the second base plate 600 is movably connected to the second guide post 700, so that the second base plate 600 and the first base plate 300 can also move relative to each other, so that when the second driving mechanism drives the second base plate 600 to move, the second base plate 600 can also drive the photosensitive chip 200 to move alone. Both the first base plate 300 and the second base plate 600 can drive the photosensitive chip 200 to move, so that a shaking amount of the camera module can be compensated, and then a stabilization function can be implemented to improve image shooting quality of the electronic device.

In addition, the first guide post 500 has a guiding effect on the first base plate 300, and the second guide post 700 has a guiding effect on the second base plate 600, so that the first guide post 500 and the second guide post 700 can guide and limit moving directions of the photosensitive chip 200, improving moving precision of the photosensitive chip 200 and preventing the photosensitive chip 200 from tilting or deviating in a moving process, so that stabilization performance of the camera module is better.

In addition, both the first base plate 300 and the second base plate 600 are movable, so that the first base plate 300 and the second base plate 600 do not tend to interact with each other, so that independent movement in two directions can be implemented, and therefore the camera module implements compensation in the two directions, so as to improve the stabilization compensation range of the camera module.

In this embodiment of this application, the first base plate 300 and the second base plate 600 are connected by the guide post, so that the first base plate 300 and the second base plate 600 may overlap each other, so that a volume of the camera module is small, and miniaturization development of the camera module is facilitated.

In a specific stabilization process of the camera module, when a gyroscope in the electronic device or the camera module detects that the camera module is tilted, the gyroscope transmits data such as an inclination angle of the camera module to a control chip, the control chip inputs a corresponding angle compensation amount, the control chip controls, through the first driving mechanism and the second driving mechanism, the first base plate 300 and the second base plate 600 to move, and the first base plate 300 and the second base plate 600 drive the photosensitive chip 200 to move to implement angle compensation, so as to implement the stabilization function of the camera module.

The first guide post 500 in the above embodiment may be welded to the base frame 100, and certainly, the first guide post 500 may alternatively be connected to the base frame 100 in other manners, which is not limited herein. A connection manner of the second guide post 700 and the first base plate 300 may be the same as a connection manner of the first guide post 500 and the base frame 100.

Optionally, the extension direction of the first guide post 500 and the extension direction of the second guide post 700 may be parallel, that is, a movement direction of the first base plate 300 and a movement direction of the second base plate 600 are the same, so that a compensation range of a jitter amount of the photosensitive chip 200 in a same direction may be increased.

Certainly, an extension direction of the first guide post 500 may intersect with an extension direction of the second guide post 700. In this case, an extension direction of at least one of the first guide post 500 and the second guide post 700 may be in a length direction or a width direction of the photosensitive chip 200, and an extension direction of the other one may be perpendicular to a thickness direction of the photosensitive chip 200, that is, the extension direction of the other of the first guide post 500 and the second guide post 700 may be perpendicular to a photosensitive surface of the photosensitive chip 200, and in this case, the guide post perpendicular to the photosensitive surface of the photosensitive chip 200 is configured to implement a focusing function of the photosensitive chip 200.

In another optional embodiment, an extension direction of the first guide post 500 may intersect with an extension direction of the second guide post 700, and a plane in which the first guide post 500 and the second guide post 700 are located may be parallel to a plane in which the photosensitive chip 200 is located. In this solution, the photosensitive chip 200 may move in a plane in which the photosensitive chip 200 is located, so that movement of the photosensitive chip 200 in two different directions may be implemented, and a stabilization range of the photosensitive chip 200 is further improved.

Further, an extension direction of the first guide post 500 and an extension direction of the second guide post 700 may alternatively be perpendicular. In this case, the extension direction of the first guide post 500 may be parallel to the length direction of the photosensitive chip 200. The extension direction of the second guide post 700 may be parallel to the width direction of the photosensitive chip 200.

In order to further improve the stabilization performance of the camera module, in another optional embodiment, there may be at least two first guide posts 500, the at least two first guide posts 500 may be respectively located on two opposite sides of the first base plate 300, and extension directions of the at least two first guide posts 500 are parallel. In this solution, the two sides of the first base plate 300 are provided with the first guide posts 500, so that the first guide posts 500 on the sides can uniformly support the first base plate 300, preventing the first base plate 300 from tilting to a single side in the moving process, to further improve the stabilization performance of the camera module.

In the above embodiment, the first base plate 300 may be provided a first side and a second side disposed back to back each other, and the first side and the second side may be provided with guide holes that are through. In this way, when the first base plate 300 is matched with the guide post, the first guide posts 500 need to be firstly sleeved in the guide holes on the first side and the second side, and then the first guide post 500 and the base frame 100 are connected. As a result, when the guide post and the base frame 100 are connected, the first base plate 300 easily interferes with the base frame 100, resulting in a large installation difficulty.

Based on this, in another optional embodiment, the first side may be provided with a first clamping part 310, the second side may be provided with a first guide hole 320 extending in the extending direction of the first guide post 500, one first guide post 500 is clamped and connected to the first clamping part 310, and the other first guide post 500 may be sleeved in the first guide hole 320. In this solution, the first clamping portion 310 is an opening structure, and therefore can be directly connected to the first guide post 500. In a specific assembly process, one of the first guide posts 500 may first be sleeved in the first guide hole 320, and then after all other components on the base frame 100 and first guide posts 500 are installed, the first guide post 500 on the other side is clamped to the first clamping part 310, so that the first base plate 300 does not affect mounting of the other components of the base frame 100. Therefore, mounting difficulty of the camera module is small.

In addition, the first clamping portion 310 may be a protruding structure protruding from the first base plate 300, so that a volume of the first clamping portion 310 is small, and an overall volume of the first base plate 300 is small, to optimize layout of the camera module. The second clamping portion 610 may also be a protruding structure, and details are not described herein again.

In another optional embodiment, there may be at least two second guide posts 700, the at least two second guide posts 700 may be respectively located on two opposite sides of the second base plate 600, and extension directions of the at least two second guide posts 700 are parallel. In this solution, the two sides of the second base plate 600 are provided with the second guide posts 700, so that the second guide posts 700 on the two sides can support the second base plate 600 uniformly, preventing the second base plate 600 from tilting to a single side in the moving process, to further improve the stabilization performance of the camera module.

In another optional embodiment, the second base plate 600 may have a third side and a fourth side disposed back to back each other, the third side may be provided with a second clamping part 610, the fourth side may be provided with a second guide hole 620 that is through in the extending direction of the second guide post 700, one second guide post 700 may be clamped and connected to the second clamping part 610, and the other second guide post 700 may be sleeved in the second guide hole 620.

In this solution, the second clamping part 610 is an opening structure, and therefore can be directly connected to the second guide post 700. In a specific assembly process, one of the second guide posts 700 may be sleeved in the second guide hole 620, and then after other components on the first base plate 300 and second guide posts 700 are installed, the second guide post 700 on the other side is clamped into the second clamping part 610, so that the second base plate 600 does not affect mounting of the other components of the first base plate 300. Therefore, mounting difficulty of the camera module is small.

In another optional embodiment, the first base plate 300 may be provided with a first avoiding hole 330, and at least a part of the second base plate 600 may be sleeved in the first avoiding hole 330. In this solution, the at least a part of the second base plate 600 may be sleeved in the first avoiding hole 330, so that a stacking thickness of the first base plate 300 and the second base plate 600 may be reduced, and the volume of the camera module is further reduced.

In the embodiment of the present application, the first driving mechanism includes a first magnet 410 and a first coil 420, the first coil 420 is disposed opposite to the first magnet 410, one of the first magnet 410 and the first coil 420 is disposed on the base frame 100, and the other of the first magnet 410 and the first coil 420 is disposed on the first base plate 300. The first coil 420 and the first magnet 410 drive the first base plate 300 to move. The energized first coil 420 can generate an ampere force in a magnetic field generated by the first magnet 410, and the ampere force generated by the first coil 420 and the first magnet 410 can drive the first base plate 300 to move. In this solution, when a direction of a current flowing into the first coil 420 is changed, a direction of the ampere force is changed, so that the photosensitive chip 200 is flexible in direction changing and has improved stabilization performance.

In addition, compared with in a manner in which the first base plate 300 is driven by a component such as a motor, the first coil 420 and the second coil 440 have a smaller volume and a simpler structure.

In the embodiment of the present application, the second driving mechanism includes a second magnet 430 and a second coil 440, the second coil 440 is disposed opposite to the second magnet 430, one of the second magnet 430 and the second coil 440 is disposed on the base frame 100, and the other is disposed on the second base plate 600. The second coil 440 and the second magnet 430 drive the second base plate 600 to move. Effect of this solution is the same as effects achieved by the foregoing solution, and details are not described herein again.

In an embodiment not covered by the claimed invention, the first driving mechanism may further be a first driving motor, the second driving mechanism may be a second driving motor, the first driving motor is disposed on the base frame 100, and the second driving motor is disposed on the first base plate 300. In this case, when the first driving motor drives the first base plate 300 to move, the first driving motor also needs to drive the second driving motor to move. Certainly, the first driving mechanism and the second driving mechanism may alternatively be other power structures, which are not limited herein and do not form part of the claimed invention.

In the embodiment of the present application, the first base plate 300 is provided with a first mounting hole 340, and the first magnet 410 or the first coil 420 is located in the first mounting hole 340. The second base plate 600 is provided with a second mounting hole 630, and the second magnet 430 or the second coil 440 is located in the second mounting hole 630. This solution can further reduce the volume of the camera module, to improve light and thin performance of the camera module.

In another optional embodiment, the camera module further includes a circuit board 800, the circuit board 800 is disposed on the base frame 100, the first coil 420 and the second coil 440 may both be disposed on the circuit board 800, the first magnet 410 may be disposed on the first base plate 300, and the second magnet 430 may be disposed on the second base plate 600. In this solution, the circuit board 800 can be used to fasten the first coil 420 and the second coil 440, and can also be used to provide electric power for the first coil 420 and the second coil 440, optimizing circuit layout of the camera module.

In addition, both the first base plate 300 and the second base plate 600 are movable parts, and therefore, when the first coil 420 and the second coil 440 are disposed on a movable part, the first coil 420 and the second coil 440 tend to be pulled by a circuit connected to the first coil 420 and the second coil 440, and consequently the first coil 420 and the second coil 440 may be easily broken. Therefore, both the first coil 420 and the second coil 440 are disposed on the base frame 100. When the base frame 100 is not moved, the first coil 420 and the second coil 440 are not moved, so that it is not easy to occur a phenomenon that the first coil 420 and the second coil 440 are pulled by the circuit connected to the first coil 420 and the second coil 440, and it is not easy to cause disconnecting between the first coil 420 and the second coil 440, and the circuit connected to the first coil 420 and the second coil 440.

In another optional embodiment, the camera module disclosed in this application may further include at least one detection component, the at least one detection component may be disposed on the circuit board 800 and electrically connected to the circuit board 800, and the detection component may be configured to detect a deviation angle of the lens relative to the photosensitive chip 200. In this solution, the detection component may perform real-time measurement on the deviation angle of the photosensitive chip 200, to ensure a stabilization effect of the camera module. The detection component can be a Hall chip, and certainly, may alternatively be a chip of another type, which is not limited herein.

In a specific operation process, when the photosensitive chip 200 is moved, the detection component can detect the deviation angle of the photosensitive chip 200, and a detection signal can be fed back to the control chip to correct a deviated position of the photosensitive chip 200.

In embodiments of this application, the base frame 100 may include a base and a top plate, and only a part of the base frame 100, that is, the base, is shown in FIG. 1 disclosed in this application, and the top plate is not shown. The circuit board 800 may be disposed on the top plate.

In another optional embodiment, the second base plate 600 may be provided with a second avoiding hole, and at least part of the photosensitive chip 200 may be located in the second avoiding hole, to further reduce a volume of the camera module.

Based on the camera module disclosed in the embodiments of this application, an embodiment of this application further discloses an electronic device. The electronic device includes the camera module according to any one of the above embodiments.

The electronic device disclosed in this embodiment of this application may be a smart phone, a tablet computer, an eBook reader, a wearable device (for example, a smart watch), a video game console, and the like. A specific type of the electronic device is not limited in this embodiment of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A camera module, comprising
a base frame (100), a photosensitive chip (200), a first base plate (300), a second base plate (600), a first guide post (500), a second guide post (700), a first driving mechanism, and a second driving mechanism, wherein
the first guide post (500) is disposed on the base frame (100), the first base plate (300) is movably connected to the first guide post (500), and the first base plate (300) moves in an extension direction of the first guide post (500);
the second guide post (700) is disposed on the first base plate (300), the second base plate (600) is movably connected to the second guide post (700), the second base plate (600) moves in an extension direction of the second guide post (700), and the photosensitive chip (200) is disposed on the second base plate (600);
the first driving mechanism is connected to the first base plate (300), and the first driving mechanism drives, through the first base plate (300) and the second base plate (600), the photosensitive chip (200) to move; and
the second driving mechanism is connected to the second base plate (600), and the second driving mechanism drives, through the second base plate (600), the photosensitive chip (200) to move; **characterized in that**
the first driving mechanism comprises a first magnet (410) and a first coil (420), the first coil (420) is disposed opposite to the first magnet (410), one of the first magnet (410) and the first coil (420) is disposed on the base frame (100), and the other of the first magnet (410) and the first coil (420) is disposed on the first base plate (300);
the first coil (420) and the first magnet (410) drive the first base plate (300) to move; the second driving mechanism comprises a second magnet (430) and a second coil (440), the second coil (440) is disposed opposite to the second magnet (430), one of the second magnet (430) and the second coil (440) is disposed on the base frame (100), and the other of the second magnet (430) and the second coil (440) is disposed on the second base plate (600);
the second coil (440) and the second magnet (430) drive the second base plate (600) to move; and
the first base plate (300) is provided with a first mounting hole (340), and the first magnet (410) or the first coil (420) is located in the first mounting hole (340); and the second base plate (600) is provided with a second mounting hole (630), and the second magnet (430) or the second coil (440) is located in the second mounting hole (630).

2. The camera module according to claim 1, wherein the extension direction of the first guide post (500) intersects with the extension direction of the second guide post (700), and a plane in which the first guide post (500) and the second guide post (700) are located is parallel to a plane in which the photosensitive chip (200) is located.

3. The camera module according to claim 1, wherein there are at least two first guide posts (500), the at least two first guide posts (500) are respectively located on two opposite sides of the first base plate (300), and extension directions of the at least two first guide posts (500) are parallel.

4. The camera module according to claim 3, wherein the first base plate (300) has a first side and a second side opposite to each other, the first side is provided with a first clamping part (310), the second side is provided with a first guide hole (320) that is through in the extension direction of the first guide post (500), one of the at least two first guide posts (500) is clamped and connected to the first clamping part (310) and another of the at least two first guide posts (500) is sleeved in the first guide hole (320).

5. The camera module according to claim 1, wherein there are at least two second guide posts (700), the at least two second guide posts (700) are respectively located on two opposite sides of the second base plate (600), and extension directions of the at least two second guide posts (700) are parallel.

6. The camera module according to claim 5, wherein the second base plate (600) has a third side and a fourth side opposite to each other, the third side is provided with a second clamping part (610), the fourth side is provided with a second guide hole (620) that is through in the extension direction of the second guide post (700), one of the at least two second guide posts (700) is clamped and connected to the second clamping part (610), and another of the at least two second guide posts (700) is sleeved in the second guide hole (620).

7. The camera module according to claim 1, wherein the first base plate (300) is provided with a first avoiding hole (330), and at least a part of the second base plate (600) is located in the first avoiding hole (330).

8. The camera module according to claim 1, wherein the camera module further comprises a circuit board (800), the circuit board (800) is disposed on the base frame (100), the first coil (420) and the second coil (440) are disposed on the circuit board (800), the first magnet (410) is disposed on the first base plate (300), and the second magnet (430) is disposed on the second base plate (600).

9. An electronic device, comprising the camera module according to any one of claims 1 to 8.

## Patentansprüche

1. Kameramodul, umfassend
einen Grundrahmen (100), einen photosensitiven Chip (200), eine erste Grundplatte (300), eine zweite Grundplatte (600), einen ersten Führungsstift (500), einen zweiten Führungsstift (700), einen ersten Antriebsmechanismus und einen zweiten Antriebsmechanismus, wobei
der erste Führungsstift (500) auf dem Grundrahmen (100) angeordnet ist, die erste Grundplatte (300) beweglich mit dem ersten Führungsstift (500) verbunden ist und sich die erste Grundplatte (300) in einer Erstreckungsrichtung des ersten Führungsstifts (500) bewegt;
der zweite Führungsstift (700) auf der ersten Grundplatte (300) angeordnet ist, die zweite Grundplatte (600) beweglich mit dem zweiten Führungsstift (700) verbunden ist, sich die zweite Grundplatte (600) in einer Erstreckungsrichtung des zweiten Führungsstifts (700) bewegt und der photosensitive Chip (200) auf der zweiten Grundplatte (600) angeordnet ist;
der erste Antriebsmechanismus mit der ersten Grundplatte (300) verbunden ist und der erste Antriebsmechanismus den photosensitiven Chip (200) über die erste Grundplatte (300) und die zweite Grundplatte (600) antreibt, sich zu bewegen; und
der zweite Antriebsmechanismus mit der zweiten Grundplatte (600) verbunden ist und der zweite Antriebsmechanismus den photosensitiven Chip (200) über die zweite Grundplatte (600) antreibt, sich zu bewegen; **dadurch gekennzeichnet, dass**
der erste Antriebsmechanismus einen ersten Magneten (410) und eine erste Spule (420) umfasst, die erste Spule (420) gegenüber dem ersten Magneten (410) angeordnet ist, einer von dem ersten Magneten (410) und der ersten Spule (420) auf dem Grundrahmen (100) angeordnet ist und der andere von dem ersten Magneten (410) und der ersten Spule (420) auf der ersten Grundplatte (300) angeordnet ist;
die erste Spule (420) und der erste Magnet (410) die erste Grundplatte (300) antreiben, sich zu bewegen;
der zweite Antriebsmechanismus einen zweiten Magneten (430) und eine zweite Spule (440) umfasst, die zweite Spule (440) gegenüber dem zweiten Magneten (430) angeordnet ist, einer von dem zweiten Magneten (430) und der zweiten Spule (440) auf dem Grundrahmen (100) angeordnet ist und der andere von dem zweiten Magneten (430) und der zweiten Spule (440) auf der zweiten Grundplatte (600) angeordnet ist;
die zweite Spule (440) und der zweite Magnet (430) die zweite Grundplatte (600) antreiben, sich zu bewegen; und
die erste Grundplatte (300) mit einem ersten Montageloch (340) versehen ist und der erste Magnet (410) oder die erste Spule (420) in dem ersten Montageloch (340) angeordnet ist; und die zweite Grundplatte (600) mit einem zweiten Montageloch (630) versehen ist und der zweite Magnet (430) oder die zweite Spule (440) in dem zweiten Montageloch (630) angeordnet ist.

2. Kameramodul nach Anspruch 1, wobei die Erstreckungsrichtung des ersten Führungsstifts (500) die Erstreckungsrichtung des zweiten Führungsstifts (700) schneidet und eine Ebene, in der der erste Führungsstift (500) und der zweite Führungsstift (700) liegen, parallel zu einer Ebene ist, in der der photosensitive Chip (200) liegt.

3. Kameramodul nach Anspruch 1, wobei mindestens zwei erste Führungsstifte (500) vorhanden sind, die mindestens zwei ersten Führungsstifte (500) jeweils an zwei gegenüberliegenden Seiten der ersten Grundplatte (300) angeordnet sind und Erstreckungsrichtungen der mindestens zwei ersten Führungsstifte (500) parallel sind.

4. Kameramodul nach Anspruch 3, wobei die erste Grundplatte (300) eine erste Seite und eine zweite, einander gegenüberliegende Seite aufweist, die erste Seite mit einem ersten Klemmteil (310) versehen ist, die zweite Seite mit einem ersten Führungsloch (320) versehen ist, das in der Erstreckungsrichtung des ersten Führungsstifts (500) durchgehend ist, einer der mindestens zwei ersten Führungsstifte (500) geklemmt und
mit dem ersten Klemmteil (310) verbunden ist und ein anderer der mindestens zwei ersten Führungsstifte (500) in dem ersten Führungsloch (320) eingesetzt ist.

5. Kameramodul nach Anspruch 1, wobei mindestens zwei zweite Führungsstifte (700) vorhanden sind, die mindestens zwei zweiten Führungsstifte (700) jeweils an zwei gegenüberliegenden Seiten der zweiten Grundplatte (600) angeordnet sind und Erstreckungsrichtungen der mindestens zwei zweiten Führungsstifte (700) parallel sind.

6. Kameramodul nach Anspruch 5, wobei die zweite Grundplatte (600) eine dritte Seite und eine vierte, einander gegenüberliegende Seite aufweist, die dritte Seite mit einem zweiten Klemmteil (610) versehen ist, die vierte Seite mit einem zweiten Führungsloch (620) versehen ist, das in der Erstreckungsrichtung des zweiten Führungsstifts (700) durchgehend ist, einer der mindestens zwei
zweiten Führungsstifte
(700) geklemmt und mit dem zweiten Klemmteil (610) verbunden ist und ein anderer der mindestens zwei
zweiten Führungsstifte (700) in dem zweiten Führungsloch (620) eingesetzt ist.

7. Kameramodul nach Anspruch 1, wobei die erste Grundplatte (300) mit einer
ersten Aussparungsöffnung (330) versehen ist und mindestens ein Teil der zweiten Grundplatte (600) in der ersten Aussparungsöffnung (330) angeordnet ist.

8. Kameramodul nach Anspruch 1, wobei das Kameramodul ferner eine Leiterplatte (800) umfasst, die Leiterplatte (800) auf dem Grundrahmen (100) angeordnet ist, die erste Spule (420) und die zweite Spule (440) auf der Leiterplatte (800) angeordnet sind, der erste Magnet (410) auf der ersten Grundplatte (300) angeordnet ist und der zweite Magnet (430) auf der zweiten Grundplatte (600) angeordnet ist.

9. Eine elektronische Vorrichtung, umfassend das Kameramodul nach einem der Ansprüche 1 bis 8.

## Revendications

1. Module de caméra, comprenant
un bâti de base (100), une puce photosensible (200), une première plaque de base (300), une deuxième plaque de base (600), un premier montant de guidage (500), un deuxième montant de guidage (700), un premier mécanisme d'entraînement et un deuxième mécanisme d'entraînement, dans lequel
le premier montant de guidage (500) est disposé sur le bâti de base (100), la première plaque de base (300) est reliée de manière mobile au premier montant de guidage (500), et la première plaque de base (300) se déplace dans une direction d'extension du premier montant de guidage (500) ;
le deuxième montant de guidage (700) est disposé sur la première plaque de base (300), la deuxième plaque de base (600) est reliée de manière mobile au deuxième montant de guidage (700), la deuxième plaque de base (600) se déplace dans une direction d'extension du deuxième montant de guidage (700), et la puce photosensible (200) est disposée sur la deuxième plaque de base (600) ;
le premier mécanisme d'entraînement est relié à la première plaque de base (300), et le premier mécanisme d'entraînement entraîne, par l'intermédiaire de la première plaque de base (300) et de la deuxième plaque de base (600), la puce photosensible (200) à se déplacer ; et
le deuxième mécanisme d'entraînement est relié à la deuxième plaque de base (600), et le deuxième mécanisme d'entraînement entraîne, par l'intermédiaire de la deuxième plaque de base (600), la puce photosensible (200) à se déplacer ; **caractérisé en ce que**
le premier mécanisme d'entraînement comprend un premier aimant (410) et une première bobine (420), la première bobine (420) est disposée à l'opposé du premier aimant (410), l'un du premier aimant (410) et de la première bobine (420) est disposé sur le bâti de base (100), et l'autre du premier aimant (410) et de la première bobine (420) est disposé sur la première plaque de base (300) ;
la première bobine (420) et le premier aimant (410) entraînent la première plaque de base (300) à se déplacer ;
le deuxième mécanisme d'entraînement comprend un deuxième aimant (430) et une deuxième bobine (440), la deuxième bobine (440) est disposée à l'opposé du deuxième aimant (430), l'un du deuxième aimant (430) et de la deuxième bobine (440) est disposé sur le bâti de base (100), et l'autre du deuxième aimant (430) et de la deuxième bobine (440) est disposé sur la deuxième plaque de base (600) ;
la deuxième bobine (440) et le deuxième aimant (430) entraînent la deuxième plaque de base (600) à se déplacer ; et
la première plaque de base (300) est pourvue d'un premier trou de montage (340), et le premier aimant (410) ou la première bobine (420) est situé dans le premier trou de montage (340) ; et la deuxième plaque de base (600) est pourvue d'un deuxième trou de montage (630), et le deuxième aimant (430) ou la deuxième bobine (440) est situé dans le deuxième trou de montage (630).

2. Module de caméra selon la revendication 1, dans lequel la direction d'extension du premier montant de guidage (500) intersecte la direction d'extension du deuxième montant de guidage (700), et un plan dans lequel se trouvent le premier montant de guidage (500) et le deuxième montant de guidage (700) est parallèle à un plan dans lequel se trouve la puce photosensible (200).

3. Module de caméra selon la revendication 1, dans lequel il y a au moins deux premiers montants de guidage (500), les au moins deux premiers montants de guidage (500) sont respectivement situés sur deux côtés opposés de la première plaque de base (300), et les directions d'extension des au moins deux premiers montants de guidage (500) sont parallèles.

4. Module de caméra selon la revendication 3, dans lequel la première plaque de base (300) a un premier côté et un deuxième côté opposés l'un à l'autre, le premier côté est pourvu d'une première partie de serrage (310), le deuxième côté est pourvu d'un premier trou de guidage (320) qui est traversant dans la direction d'extension du premier montant de guidage (500), l'un des au moins deux premiers montants de guidage
(500) est serré et
relié à la première partie de serrage (310), et un autre des au moins deux premiers montants de guidage (500) est emmanché dans
le premier trou de guidage (320).

5. Module de caméra selon la revendication 1, dans lequel il y a au moins deux deuxièmes montants de guidage (700), les au moins deux deuxièmes montants de guidage (700) sont respectivement situés sur deux côtés opposés de la deuxième plaque de base (600), et les directions d'extension des au moins deux deuxièmes montants de guidage (700) sont parallèles.

6. Module de caméra selon la revendication 5, dans lequel la deuxième plaque de base (600) a un troisième côté et un quatrième côté opposés l'un à l'autre, le troisième côté est pourvu d'une deuxième partie de serrage (610), le quatrième côté est pourvu d'un deuxième trou de guidage (620) qui est traversant dans la direction d'extension du deuxième montant de guidage (700), l'un des au moins deux deuxièmes montants de guidage
(700) est serré et relié à la deuxième partie de serrage (610), et un autre des au
moins deux
deuxièmes montants de guidage (700) est emmanché dans le deuxième trou de guidage (620).

7. Module de caméra selon la revendication 1, dans lequel la première plaque de base (300) est pourvue d'un
premier trou de dégagement (330), et au moins une partie de la deuxième plaque de base (600) est située dans le premier trou de dégagement (330).

8. Module de caméra selon la revendication 1, dans lequel le module de caméra comprend en outre une carte de circuit imprimé (800), la carte de circuit imprimé (800) est disposée sur le bâti de base (100), la première bobine (420) et la deuxième bobine (440) sont disposées sur la carte de circuit imprimé (800), le premier aimant (410) est disposé sur la première plaque de base (300), et le deuxième aimant (430) est disposé sur la deuxième plaque de base (600).

9. Dispositif électronique, comprenant le module de caméra selon l'une quelconque des revendications 1 à 8.
